# EUROPEAN PATENT APPLICATION

(11) **EP 4 549 059 A1**
(43) Date of publication of application: **07.05.2025**
(21) Application number: 22949422.4
(22) Date of filing: 30.06.2022
(51) Int. Cl.: B23B 3/30, B23B 25/06, B23Q 15/22, B23Q 17/12

(54) **MACHINE TOOL, AND MACHINE TOOL ALIGNMENT METHOD**

(71) Applicant: Citizen Watch Co., Ltd., Nishitokyo-shi, Tokyo 188-8511 (JP)
(72) Inventor: INOUE, Atsushi, Nishitokyo-shi, Tokyo 188-8511 (JP); NOGUCHI, Kenji, Nishitokyo-shi, Tokyo 188-8511 (JP)
(74) Representative: McWilliams, David John
(86) International application number: PCT/JP2022/026305
(87) International publication number: WO 2024/004149

(57) **Abstract**

Shaft alignment in machine tools is facilitated. The machine tool includes: a first spindle holding one end of a workpiece; a second spindle holding another end of the workpiece; a sensor detecting a physical quantity related to a vibration during synchronous rotation of the first spindle and the second spindle with the workpiece being held by the first spindle and the second spindle; and a controller performing shaft alignment between the first spindle and the second spindle based on the physical quantity.

## Description

### [Technical Field]

The present disclosure relates to a machine tool and a machine tool alignment method.

### [Background Art]

Machine tools for machining a workpiece (machined object) are known, such as NC milling machines and machining centers. Some machine tools include a clamp configured to be able to implement fastening and attachment of a workpiece or tool, and a spindle that is rotatable with the workpiece or tool being mounted by the clamp or the like. An abnormality such as a cutting chip trapped in the mounting part of the workpiece or tool may affect the precision of the workpiece machining.

A known conventional technique described in PTL 1, for example, provides an approach to address this problem. PTL 1 describes a machine tool that detects abnormalities based on data related to the vibration of a clamp configured to be able to implement fastening and attachment of a workpiece or tool.

Another known type of machine tool has a main spindle and a tailstock spindle that extend along the same axis. The workpiece is held at one end and the other end thereof with the respective clamps of the main spindle and the tailstock spindle. In this type of machine tool, the main and tailstock spindles could be axially misaligned from each other (shaft misalignment or misalignment).

A known conventional technique described in PTL 2, for example, provides an approach to address this problem. PTL 2 describes correcting an axial misalignment between the main spindle and the tailstock spindle based on data acquired by measurements of the axial center of a rod member held on the main spindle and the axial center of a rod member held on the tailstock spindle opposite the main spindle, the measurement being taken using an outer diameter gauge.

### [Citation List]

### [Patent Literature]

[PTL 1] Japanese Patent Application Publication No. 2020-55051
[PTL 2] Japanese Patent Application Publication No. H11-309647

### [Summary of Invention]

### [Technical Problem]

However, it is desirable to implement the shaft alignment of the main and tailstock spindles much easier.

An object of the present disclosure is to facilitate shaft alignment in machine tools.

### [Solution to Problem]

An aspect of the present disclosure is a machine tool comprising:
a first spindle holding one end of a workpiece;
a second spindle holding another end of the workpiece;
a sensor detecting a physical quantity related to a vibration during synchronous rotation of the first spindle and the second spindle with the workpiece being held by the first spindle and the second spindle; and
a controller performing shaft alignment between the first spindle and the second spindle based on the physical quantity.

Another aspect of the present disclosure is a machine tool alignment method for a machine tool, the machine tool including:
a first spindle holding one end of a workpiece;
a second spindle holding another end of the workpiece;
a sensor detecting a physical quantity related to a vibration during synchronous rotation of the first spindle and the second spindle with the workpiece being held by the first spindle and the second spindle; and
a controller performing shaft alignment between the first spindle and the second spindle based on the physical quantity.

Yet another aspect of the present disclosure is a program for causing a computer to execute the machine tool alignment method specified above or a storage medium storing this program in a non-temporary manner.

### [Advantageous Effects of Invention]

The present disclosure facilitates shaft alignment in machine tools.

### [Brief Description of Drawings]

[Fig. 1]

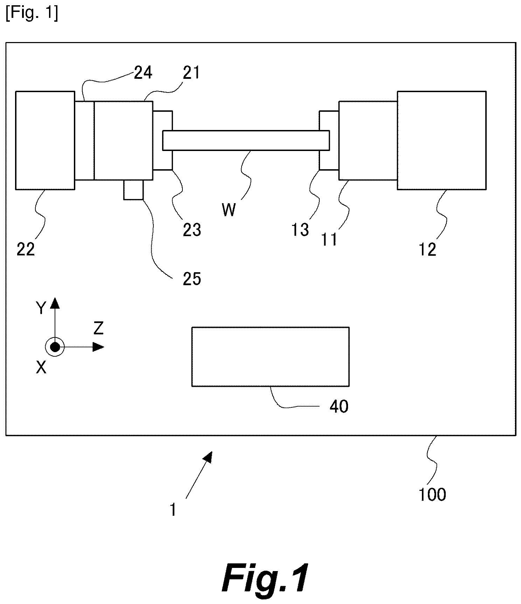

   Fig. 1 is a diagram illustrating one example of a machine tool according to an embodiment.
[Fig. 2]

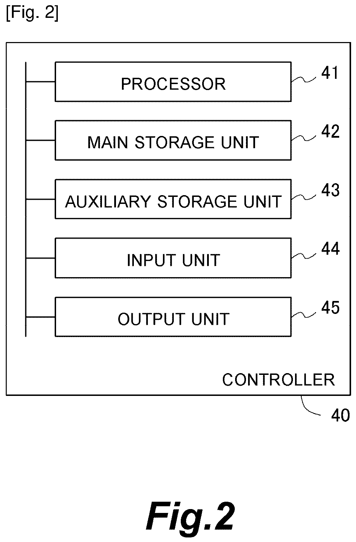

   Fig. 2 is a schematic block diagram illustrating one example of the configuration of the machine tool according to the embodiment.
[Fig. 3]

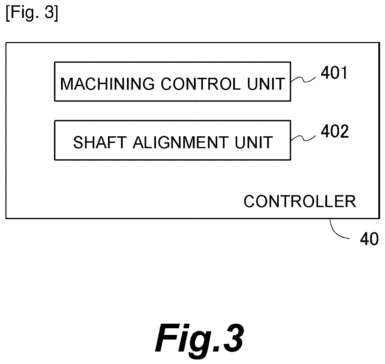

   Fig. 3 is a diagram illustrating one example of the functional configuration of a controller.
[Fig. 4]

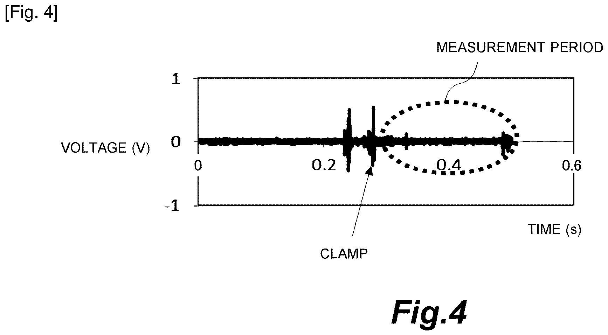

   Fig. 4 is a time chart showing vibration sensor readings before and after a workpiece is fastened.
[Fig. 5]

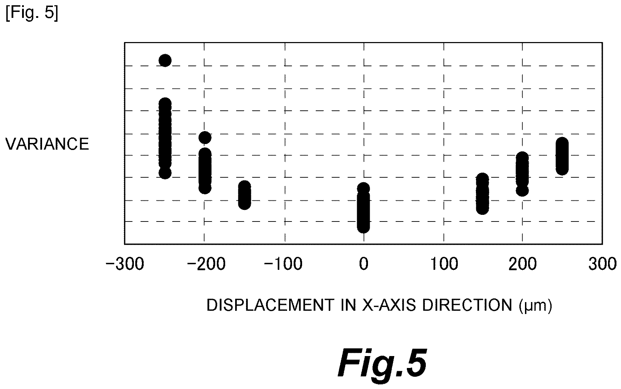

   Fig. 5 is a diagram showing the empirically obtained variance of the vibration sensor readings in a case where a second spindle is intentionally displaced relative to a first spindle.
[Fig. 6]

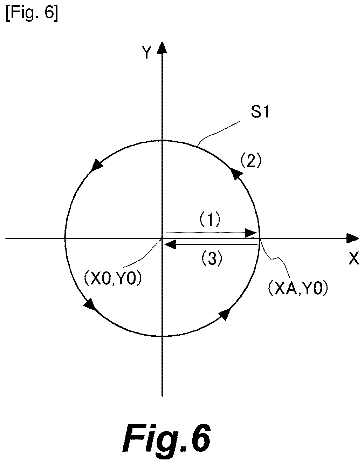

   Fig. 6 is a diagram illustrating an example of the moving track of the second spindle during the shaft alignment between the first spindle and the second spindle.
[Fig. 7]

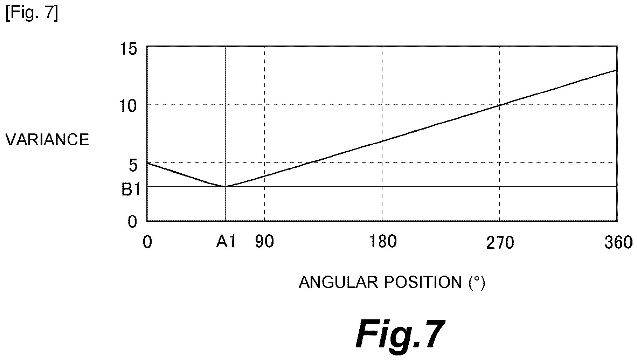

   Fig. 7 is a diagram showing an example of variance of the vibration sensor readings in a case where the second spindle is moving along the track shown in Fig. 6.
[Fig. 8]

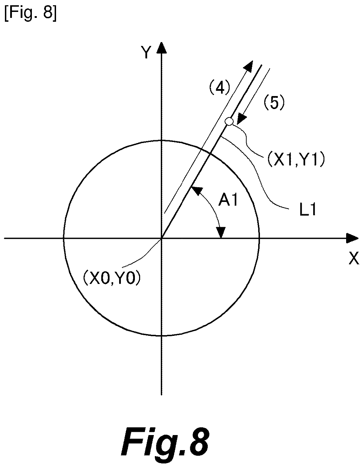

   Fig. 8 is a diagram illustrating an example of the moving track of the second spindle in the direction toward a first angular position during the shaft alignment between the first spindle and the second spindle.
[Fig. 9]

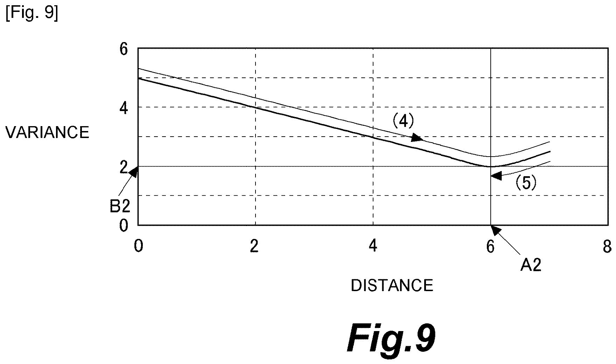

   Fig. 9 is a diagram showing an example of variance of the vibration sensor readings in a case where the second spindle is moving along the track shown in Fig. 8.
[Fig. 10]

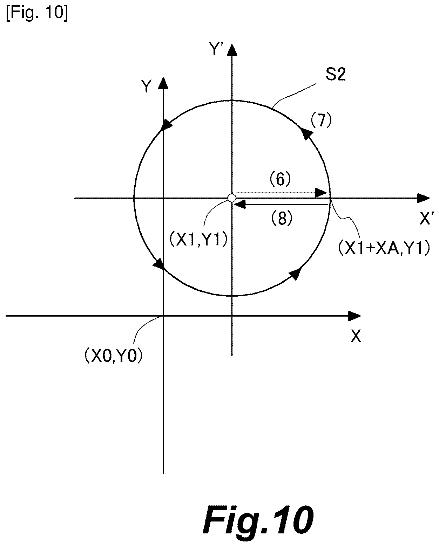

   Fig. 10 is a diagram illustrating an example of the moving track of the second spindle starting from (X1, Y1) during the shaft alignment between the first spindle and the second spindle.
[Fig. 11]

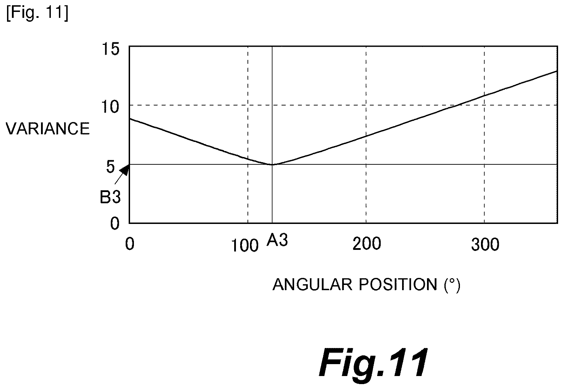

   Fig. 11 is a diagram showing an example of variance of the vibration sensor readings in a case where the second spindle is moving along the track shown in Fig. 10.
[Fig. 12]

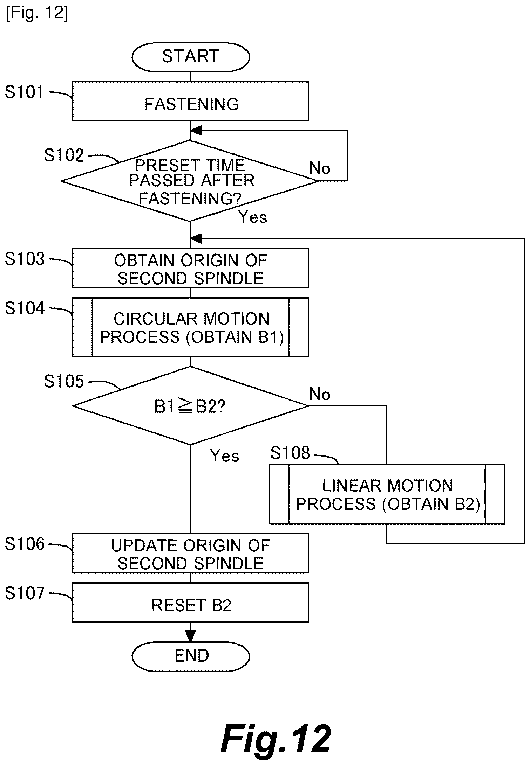

   Fig. 12 is a flowchart illustrating the process flow of shaft alignment between the first spindle and the second spindle.
[Fig. 13]

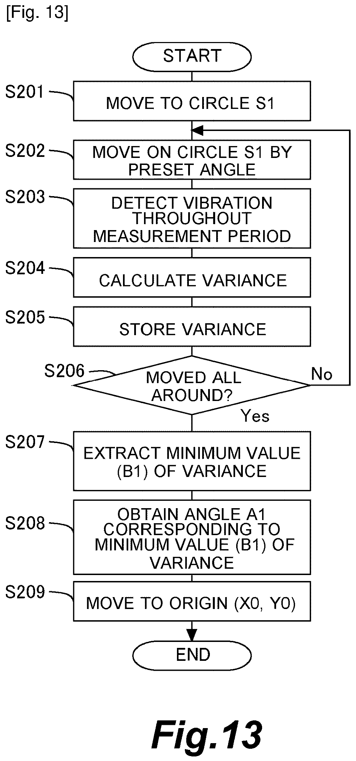

   Fig. 13 is a flowchart illustrating the process flow of a circular motion process.
[Fig. 14]

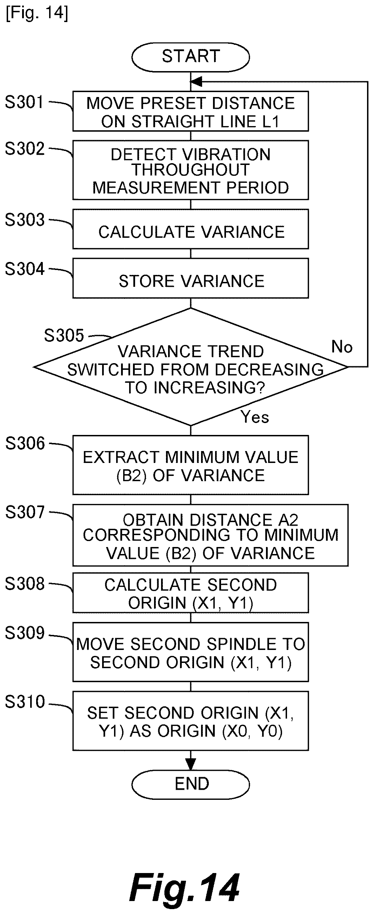

   Fig. 14 is a flowchart illustrating the process flow of a linear motion process.
[Fig. 15]

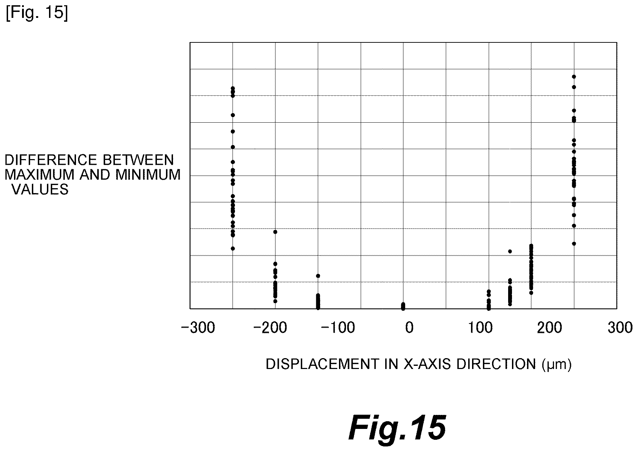

   Fig. 15 is a diagram showing the empirically obtained range of vibration sensor readings in a case where the second spindle is intentionally displaced relative to the first spindle.

### [Description of Embodiments]

A machine tool that is one aspect of the present disclosure includes: a first spindle holding one end of a workpiece; a second spindle holding the other end of the workpiece; a sensor detecting a physical quantity related to a vibration during synchronous rotation of the first spindle and the second spindle with the workpiece being held by the first spindle and the second spindle; and a controller performing shaft alignment between the first spindle and the second spindle based on the physical quantity.

When rotating the first and second spindles holding the workpiece in sync, it is desirable that the first spindle and second spindle be axially aligned. This is why shaft alignment is performed during the manufacture of machine tools. Even if shaft alignment is performed during the manufacture, the machine tool may sometimes experience a shaft misalignment due to changes over time or depending on operating conditions. Therefore, shaft alignment is sometimes performed before using the machine tool. Namely, the controller performs shaft alignment during manufacture or prior to use of the machine tool.

The shaft alignment between the first spindle and second spindle is performed while the first and second spindles are holding the same workpiece and rotating in sync. The phrase "while rotating in sync" may be any situation where the first and second spindles are rotating synchronously as a result including, for example, a case where the first and second spindles are being controlled to rotate in sync, or a case where the first and second spindles having a mechanism for rotating synchronously are rotating. When the first and second spindles are rotating in sync as described above, if the first and second spindles are axially misaligned, vibration occurs either in the first or second spindle. Therefore, it can be determined whether the first and second spindles are axially aligned based on this vibration. The controller performs shaft alignment based on this vibration.

The sensor can be any sensor capable of detecting a physical quantity relating to the vibration that occurs in the first or second spindle such as, for example, a vibration sensor (including an acceleration sensor) or a position sensor.

Embodiments of the present disclosure will be hereinafter described with reference to the drawings. It should be noted that, unless otherwise specified, the sizes, materials, shapes, and relative arrangement or the like of constituent components described in the embodiments are not intended to limit the scope of this disclosure.

### <First Embodiment>

Fig. 1 is a diagram illustrating one example of a machine tool according to this embodiment. As shown in Fig. 1, the machine tool 1 according to this embodiment includes a first spindle 11 and a first headstock 12 that rotatably supports the first spindle 11. The first spindle 11 includes a first clamp 13 operable to fasten and to allow attachment of a workpiece W at one end. The machine tool 1 also includes a second spindle 21 extending on the substantially same axial line as that of the first spindle 11 and a second headstock 22 that rotatably supports this second spindle 21. The second spindle 21 may be a tailstock spindle. The second spindle 21 includes a second clamp 23 operable to fasten and to allow attachment of the workpiece W at the other end. An adjustment mechanism 24 is provided between the second spindle 21 and the second headstock 22 for moving the second spindle 21 relative to the second headstock 22. The adjustment mechanism 24 is configured to relatively move the second spindle 21 in two directions, for example, along the X axis and the Y axis. The adjustment mechanism 24 is configured to include a gear and an actuator to drive this gear, for example. The first headstock 12 and the second headstock 22 are fixed on the same structure such as a machine bed 100, for example, so that their relative positions do not change. In Fig. 1, the axial direction of the first spindle 11 and second spindle (left and right direction in Fig. 1) shall be referred to as the Z-axis direction, the direction perpendicular to the Z axis and parallel to the top surface of the machine bed 100 (up and down direction in Fig. 1) shall be referred to as the Y-axis direction, and the direction perpendicular to the top surface of the machine bed 100 (front and back direction in Fig. 1) shall be referred to as the X-axis direction.

A clamp actuator (not shown) made up of cylinders and pistons, for example, can cause the first clamp 13 and second clamp 23 to fasten the workpiece W. With the first clamp 13 and second clamp 23 fastening the workpiece W, the first spindle 11 and second spindle 21 are rotated in sync so that the workpiece W is cut, for example, with a tool. Hereinafter, the phrase "clamping a workpiece W with the first spindle 11" shall mean clamping the workpiece W with the first clamp 13. Likewise, the phrase "clamping a workpiece W with the second spindle 21" shall mean clamping the workpiece with the second clamp 23.

A vibration sensor 25 is disposed on the second spindle 21 to measure the vibration of the second spindle 21. The vibration sensor 25 may measure the vibration of the second spindle 21 only during the shaft alignment between the first spindle 11 and the second spindle 21, or, it may continuously measure the vibration of the second spindle 21 during the operation of the machine tool 1. The timing of measurement by the vibration sensor 25 may be changed as required. The vibration sensor 25 can be disposed anywhere as long as it can measure the vibration of the second clamp 23. The vibration sensor 25 may be disposed as close as possible to the second clamp 23, for example. In this embodiment, an acceleration sensor is used as the vibration sensor 25. An acceleration sensor is a sensor capable of measuring acceleration in one direction, for example, the X-axis direction or Y-axis direction shown in Fig. 1. As an alternative, a sensor capable of measuring acceleration in two directions or more may be used. The vibration sensor 25 is not limited to an acceleration sensor, and may be a distance sensor or the like, for example. Two or more sensors may be used. Hereinafter, the phrase "readings of the vibration sensor 25" may refer to either voltages that are the outputs of the vibration sensor 25, or values converted from voltage to represent acceleration or vibration. The conversion is performed by a shaft alignment unit 402 to be described later.

The machine tool 1 includes a controller 40. The controller 40 is a computer that controls the machine tool 1. Fig. 2 is a schematic block diagram illustrating one example of the configuration of the machine tool 1 according to this embodiment.

The controller 40 has a configuration of a common computer. The controller 40 includes a processor 41, a main storage unit 42, an auxiliary storage unit 43, an input unit 44, and an output unit 45. These units are interconnected with a bus. Sensors including the vibration sensor 25 are connected to the bus with an interface so that signals from these sensors are input to the controller 40. Also connected to the bus via interfaces are an actuator that rotates the first spindle 11, an actuator that rotates the second spindle 21, an actuator that causes the first clamp 13 to fasten and open, an actuator that causes the second clamp 23 to fasten and open, the adjustment mechanism 24, etc., so that control signals are sent from the controller 40 to these components.

The processor 41 is a CPU (Central Processing Unit) or a DSP (Digital Signal Processor) and the like. The processor 41 controls the machine tool 1 and performs various information processing operations. The main storage unit 42 is a RAM (Random Access Memory) or a ROM (Read Only Memory) and the like. The auxiliary storage unit 43 is an EPROM (Erasable Programmable ROM), an HDD (Hard Disk Drive), removable media, and so on. An operating system (OS) and various programs and tables are stored in the auxiliary storage unit 43. The processor 41 loads a program stored in the auxiliary storage unit 43 to a work area of the main storage unit 42 and executes it. Various constituent parts are controlled through the execution of the program. The controller 40 thus implements the functions that serve predetermined purposes. The main storage unit 42 and auxiliary storage unit 43 are computer-readable recording media. The controller 40 may be a single computer, or a plurality of computers coordinated to work together. The information stored in the auxiliary storage unit 43 may be stored in the main storage unit 42. The information stored in the main storage unit 42 may be stored in the auxiliary storage unit 43.

The input unit 44 includes means for receiving input operations performed by a user, such as a touchscreen, a mouse, a keyboard, or a microphone. The output unit 45 includes means that present information to the user, such as an LCD (Liquid Crystal Display), an EL (Electroluminescence) panel, a speaker, and a lamp. The input unit 44 and output unit 45 can be configured as one touchscreen display.

Fig. 3 is a diagram illustrating one example of the functional configuration of the controller 40. The controller 40 includes a machining control unit 401 and a shaft alignment unit 402 as functional constituent elements. The machining control unit 401 and shaft alignment unit 402 are functional constituent elements provided by the processor 41 of the controller 40, for example, executing various programs stored in the auxiliary storage unit 43.

The machining control unit 401 controls the machine tool 1 during the machining of a workpiece W. The machining control unit 401 causes the first clamp 13 and second clamp 23 to fasten the workpiece W, rotates the first spindle 11 and second spindle 21 in sync, and controls the movement of the tool, to cut the workpiece W, for example. Any known techniques can be used for the machining control of the workpiece W by the machining control unit 401.

The shaft alignment unit 402 performs shaft alignment (alignment of shaft centers) between the first spindle 11 and second spindle 21 based on the readings of the vibration sensor 25. The shaft alignment unit 402 performs shaft alignment before the machining control of the workpiece W by the machining control unit 401, for example. Now, the relationship between the readings of the vibration sensor 25 and the axial misalignment between the first spindle 11 and second spindle 21 is explained with reference to Fig. 4 and Fig. 5.

Fig. 4 is a time chart showing the readings of the vibration sensor 25 before and after a workpiece W is fastened. The horizontal axis and vertical axis in Fig. 4 represent the time and the voltage output of the vibration sensor 25, respectively. When time is 0 in Fig. 4, one end of the workpiece W is clamped by the first clamp 13 alone, and the first spindle 11, workpiece W, and second spindle 21 are rotating in sync. The other end of the workpiece W is clamped by the second clamp 23 after that. When the second spindle 21 clamps the workpiece W, the vibration sensor 25 detects the vibration that occurs at this time. The vibration caused by this clamping is indicated with the word "clamp" in Fig. 4. After that, the first spindle 11 and second spindle 21 continue to rotate in sync with the workpiece W held on both ends by the first spindle 11 and second spindle 21.

The variance of the values detected by the vibration sensor 25 after the vibration caused by the clamping has sufficiently decreased is correlated to the degree of axial misalignment between the first spindle 11 and the second spindle 21. Fig. 5 is a diagram showing the empirically obtained variance of the readings of the vibration sensor 25 when the second spindle 21 is intentionally displaced relative to the first spindle 11. The horizontal axis in Fig. 5 represents the displacement in the X-axis direction of the second spindle 21 relative to the first spindle 11. The X axis referred to in Fig. 5 corresponds to the X axis as defined in Fig. 1. There is no displacement in the Y-axis direction. Fig. 5 plots the variance that was determined several times for each amount of displacement. The variances in Fig. 5 are those of the values detected by the vibration sensor 25 during the period denoted as "measurement period" in Fig. 4. The measurement period in Fig. 4 is a period after the vibration caused by the clamping has sufficiently decreased, and long enough for the measurement of the variance. Hereinafter, the term "variance" shall refer to the variance of the readings of the vibration sensor 25.

As shown in Fig. 5, the displacement in the X-axis direction and the variance have a correlation; the larger the absolute value of displacement in the X-axis direction, the higher the variance. In the present disclosure, shaft alignment between the first spindle 11 and second spindle 21 is performed using this phenomenon. Namely, the shaft alignment between the first spindle 11 and the second spindle 21 is carried out by moving the second spindle 21 in a direction in which the variance of the readings of the vibration sensor 25 reduces.

Next, the control that is executed when the shaft alignment between the first spindle 11 and the second spindle 21 is performed in this embodiment will be described. The shaft alignment unit 402 performs the shaft alignment between the first spindle 11 and the second spindle 21 with the first spindle 11 and second spindle 21 both holding the same workpiece W and rotating in the same direction at the same rotation speed (i.e., rotating in sync). The shaft alignment unit 402 performs the shaft alignment after the vibration caused by the fastening of the workpiece W has reduced sufficiently to avoid adverse effects of the vibration. The shaft alignment can be performed only once during the manufacture of the machine tool 1, or every time the machine tool 1 is started, or every time a workpiece W is fastened.

Fig. 6 is a diagram illustrating an example of the moving track of the second spindle 21 during the shaft alignment between the first spindle 11 and the second spindle 21. The X axis and Y axis in Fig. 6 correspond respectively to the X axis and Y axis in Fig. 1. In Fig. 6, the coordinates of the origin, which is the starting point of the second spindle 21, is shown by (X0, Y0). The origin is the position of the center axis of the second spindle 21 when the second spindle 21 has fastened the workpiece W. The shaft alignment unit 402 moves the second spindle 21 along a circle S1 having the origin (X0, Y0) as the center. The diameter of the circle S1 can be set to any suitable value not greater than the maximum value of an axial misalignment between the first spindle 11 and the second spindle 21 due to manufacturing tolerances, for example. Namely, even if there is an axial misalignment between the first spindle 11 and the second spindle 21, it is assumed to be within the range of manufacturing tolerances. Therefore, the second spindle 21 is moved within this range to find the position where it is axially aligned.

The shaft alignment unit 402 carries out the following steps in the shaft alignment process. Numbers (1) to (3) below respectively correspond to arrows (1) to (3) shown in Fig. 6.
(1) First, the shaft alignment unit 402 generates a command to move the second spindle 21 in the X-axis direction to (XA, Y0). The readings of the vibration sensor 25 at this time are not used. Position (XA, Y0) is the intersection of the X axis and the circle S1. Position (XA, Y0), or the diameter radius of the circle S1, is stored in the auxiliary storage unit 43 in advance. The shaft alignment unit 402 sends the generated command to the adjustment mechanism 24, which moves the second spindle 21 based on this command. When the current position of the second spindle 21 reaches position (XA, Y0), the shaft alignment unit 402 stops the second spindle 21. The current position of the second spindle 21 may be detected using a sensor, for example, or may be determined by calculation based on the amount of movement of the adjustment mechanism 24.
(2) Next, the shaft alignment unit 402 generates a command to move the second spindle 21 along the circle S1. While the second spindle 21 is moved counterclockwise in Fig. 6, it may be moved clockwise. The readings of the vibration sensor 25 are obtained, for example, at each preset angular position around the origin (X0, Y0). In this case, the shaft alignment unit 402 stops the second spindle 21 at each preset angular position throughout a measurement period and obtains the readings of the vibration sensor 25 throughout the measurement period. Therefore, the shaft alignment unit 402 generates a command for moving the second spindle 21 along the circle S1 and a command for stopping the second spindle 21 at each preset angular position throughout the measurement period, and sends these commands to the adjustment mechanism 24. The adjustment mechanism 24 moves the second spindle 21 based on these commands.
   The measurement period is preset to be a period that allows accurate calculation of the variance corresponding to a shaft misalignment. The shaft alignment unit 402 stores the readings of the vibration sensor 25 obtained throughout the measurement period at each preset angular position in the auxiliary storage unit 43 associating them with the angular positions around the origin (X0, Y0). Moreover, the shaft alignment unit 402 calculates the variance of the readings of the vibration sensor 25 based on the readings of the vibration sensor 25 obtained throughout the measurement period and stores the variance in the auxiliary storage unit 43 associating it with the angular position around the origin (X0, Y0). The angular positions may be set based on the time required for the shaft alignment and the accuracy of the shaft alignment, for example. The smaller the angle between angular positions, the more accurate the shaft alignment will be, although it will take more time for the shaft alignment. The angle may therefore be determined by the user based on which of the time and the accuracy should be given priority. For example, a preset angular position may be input from the input unit 44.
(3) When the second spindle 21 returns to position (XA, Y0), the shaft alignment unit 402 stops the detection of vibration by the vibration sensor 25 and generates a command to move the second spindle 21 to the origin (X0, Y0). The shaft alignment unit 402 sends the generated command to the adjustment mechanism 24, which moves the second spindle 21 to the origin (X0, Y0) based on this command.

Fig. 7 is a diagram showing an example of variance of the readings of the vibration sensor 25 in a case where the second spindle 21 is moving along the track shown in Fig. 6. The horizontal axis represents the angular position around the origin (X0, Y0) with 0 being the angular position when the second spindle 21 is at position (XA, Y0). In the example shown in Fig. 7, the variance reduces as the angle increases from 0 and reaches the minimum value denoted by B1 at angular position A1. The variance increases as the angle increases from A1. Hereinafter, the angle denoted by A1 will be referred to also as first angular position A1. The position on the circle S1 where the variance is minimum corresponds to a first target position according to the present disclosure.

In the example shown in Fig. 7, the variance is minimum at the first angular position A1. This means that moving the second spindle 21 from the origin (X0, Y0) toward the first angular position A1 can decrease the variance. Namely, the misalignment between the first spindle 11 and second spindle 21 can be reduced.

Accordingly, the shaft alignment unit 402 searches for a position where the variance becomes even lower while moving the second spindle 21 toward the first angular position A1. Fig. 8 is a diagram illustrating an example of the moving track of the second spindle 21 toward the first angular position A1 during the shaft alignment between the first spindle 11 and the second spindle 21. The origin (X0, Y0) in Fig. 8 is at the same position as the origin (X0, Y0) shown in Fig. 6.

The shaft alignment unit 402 moves the second spindle 21 from the origin (X0, Y0) along a straight line L1 extending toward the first angular position A1. For this, the shaft alignment unit 402 carries out the following steps. Numbers (4) and (5) below respectively correspond to arrows (4) and (5) shown in Fig. 8.

(4) The shaft alignment unit 402 generates a command to move the second spindle 21 along the straight line L1 away from the origin (X0, Y0). The readings of the vibration sensor 25 are obtained, for example, at each preset distance from the origin (X0, Y0). In this case, the shaft alignment unit 402 stops the second spindle 21 at each preset distance throughout a measurement period and obtains the readings of the vibration sensor 25 throughout the measurement period. Therefore, the shaft alignment unit 402 generates a command for moving the second spindle 21 along the straight line L1 and a command for stopping the second spindle 21 at each preset distance throughout the measurement period, and sends these commands to the adjustment mechanism 24. The adjustment mechanism 24 moves the second spindle 21 based on these commands.

The shaft alignment unit 402 stores the readings of the vibration sensor 25 obtained at each preset distance throughout the measurement period in the auxiliary storage unit 43 associating them with the distances from the origin (X0, Y0). Moreover, the shaft alignment unit 402 calculates the variance of the readings of the vibration sensor 25 based on the readings of the vibration sensor 25 obtained throughout the measurement period and stores the variance in the auxiliary storage unit 43 associating it with the distance from the origin (X0, Y0). The distance may be set based on the time required for the shaft alignment and the accuracy of the shaft alignment, for example. The shorter the preset distance, the more accurate the shaft alignment will be, although it will take more time for the shaft alignment. The distance may therefore be determined by the user based on which of the time and the accuracy should be given priority. For example, a preset distance may be input from the input unit 44.

(5) When the trend of the variance switches from decreasing to increasing, the shaft alignment unit 402 generates a command to move the second spindle 21 toward a second origin (X1, Y1) where the variance is minimum in search of this second origin (X1, Y1). The shaft alignment unit 402 compares a variance stored in the auxiliary storage unit 43 with the previous and subsequent ones to determine the variance B2 at which the trend switches from decreasing to increasing, and computes the distance A2 from the origin (X0, Y0) corresponding to this variance B2. The position (X1, Y1) of the second spindle 21 after it has moved this distance A2 is determined by calculating X1 = A2·cosA1 and Y1 = A2·sinA1. This position (X1, Y1) will be hereinafter referred to also as the second origin (X1, Y1). The second origin (X1, Y1) is the position away from the origin (X0, Y0) by distance A2 in the direction of the first angular position A1. The shaft alignment unit 402 sends the generated command to the adjustment mechanism 24, which moves the second spindle 21 to the second origin (X1, Y1) based on this command. The position on the straight line L1 where the variance is minimum corresponds to a second target position according to the present disclosure.

Fig. 9 is a diagram showing an example of variance of the readings of the vibration sensor 25 when the second spindle 21 is moving along the track shown in Fig. 8. The horizontal axis represents the distance from the origin (X0, Y0). Numbers (4) and (5) shown in Fig. 9 respectively correspond to numbers (4) and (5) shown in Fig. 8. In the example shown in Fig. 9, the variance reduces as the distance increases from 0, and reaches the minimum value denoted by B2 when the distance is A2. The variance increases as the distance increases from A2. As shown, the variance becomes minimum at B2 when the distance is A2.

The second origin (X1, Y1) is the position away from the origin (X0, Y0) by a distance at which the variance becomes lowest in a direction of an angular position in which the variance of the readings of the vibration sensor 25 becomes minimum. At such a second origin (X1, Y1), the variance of the readings of the vibration sensor 25 is lower as compared to the origin (X0, Y0). The position where the variance of the readings of the vibration sensor 25 is lowest possible can be searched for in this way.

When the first spindle 11 and second spindle 21 are axially aligned, the variance B2 of the readings of the vibration sensor 25 at the second origin (X1, Y1) becomes substantially low. On the other hand, there may still remain an axial misalignment between the first spindle 11 and the second spindle 21. In this case, there is a position where the variance of the readings of the vibration sensor 25 is even lower. Therefore, the shaft alignment unit 402 performs the control steps (1) to (5) described above again starting from the second origin (X1, Y1). By repeating this control in the manner described above, the position of the second spindle 21 where the variance of the readings of the vibration sensor 25 becomes even lower can be determined.

Fig. 10 is a diagram illustrating an example of the moving track of the second spindle 21 starting from (X1, Y1) during the shaft alignment between the first spindle 11 and the second spindle 21. In Fig. 10, the coordinates of the starting point of the second spindle 21 are those of the second origin (X1, Y1). The second limit (X1, Y1) is the origin of the X'Y' coordinate system. The second origin (X1, Y1) that is the starting point in Fig. 10 is at the same position as the second origin (X1, Y1) in Fig. 8. The shaft alignment unit 402 moves the second spindle 21 along a circle S2 having the second origin (X1, Y1) as the center. The circle S2 has the same diameter as the circle S1 shown in Fig. 6. Alternatively, the circle S2 may have a smaller diameter than the circle S1.

Similarly to the steps described with reference to Fig. 6, the shaft alignment unit 402 carries out the following steps. Numbers (6) to (8) below respectively correspond to arrows (6) to (8) shown in Fig. 10.

(6) First, the shaft alignment unit 402 generates a command to move the second spindle 21 in the X'-axis direction to (X1 + XA, Y1). The readings of the vibration sensor 25 at this time are not used. The shaft alignment unit 402 sends the generated command to the adjustment mechanism 24, which moves the second spindle 21 based on this command.

(7) Next, the shaft alignment unit 402 generates a command to move the second spindle 21 along the circle S2. The readings of the vibration sensor 25 are obtained, for example, at each preset angular position around the second origin (X1, Y1). In this case, the shaft alignment unit 402 stops the second spindle 21 at each preset angular position throughout a measurement period and obtains the readings of the vibration sensor 25 throughout the measurement period. Therefore, the shaft alignment unit 402 generates a command for moving the second spindle 21 along the circle S2 and a command for stopping the second spindle 21 at each preset angular position throughout the measurement period, and sends these commands to the adjustment mechanism 24. The adjustment mechanism 24 moves the second spindle 21 based on these commands.

The measurement period is the same as the one described with reference to Fig. 6. The shaft alignment unit 402 stores the readings of the vibration sensor 25 obtained throughout the measurement period at each preset angular position in the auxiliary storage unit 43 associating them with the angular positions around the second origin (X1, Y1). Moreover, the shaft alignment unit 402 calculates the variance of the readings of the vibration sensor 25 based on the readings of the vibration sensor 25 obtained throughout the measurement period and stores the variance in the auxiliary storage unit 43 associating it with the angular position around the second origin (X1, Y1). The preset angular position is the same as the one described with reference to Fig. 6. Alternatively, different angular positions from those described with reference to Fig. 6 may be adopted.

(8) When the second spindle 21 returns to position (X1 + XA, Y1), the shaft alignment unit 402 stops the detection of vibration by the vibration sensor 25 and generates a command to move the second spindle 21 to the second origin (X1, Y1). The shaft alignment unit 402 sends the generated command to the adjustment mechanism 24, which moves the second spindle 21 to the second origin (X1, Y1) based on this command.

Fig. 11 is a diagram showing an example of variance of the readings of the vibration sensor 25 when the second spindle 21 is moving along the track shown in Fig. 10. The horizontal axis represents the angular position around the second origin (X1, Y1) with 0 being the angular position when the second spindle 21 is at position (X1 + XA, Y1). In the example shown in Fig. 11, the variance reduces as the angle increases from 0 and reaches the minimum value denoted by B3 at angular position A3. The variance increases as the angle increases from A3. Hereinafter, the angle denoted by A3 will be referred to also as second angular position A3. The position on the circle S2 where the variance is minimum also corresponds to the first target position according to the present disclosure.

In the example shown in Fig. 11, the variance is minimum at second angular position A3. This means that moving the second spindle 21 from the second origin (X1, Y1) of the second angular position A3 can decrease the variance. Namely, it can reduce the axial misalignment between the first spindle 11 and second spindle 21. In this case, the position where the variance will become even lower can be searched by carrying out the same process as the one described with reference to Fig. 8 and Fig. 9. Here, the same process is carried out repeatedly, with the X' axis and Y' axis being replaced with the X axis and Y axis.

On the other hand, when the first spindle 11 and second spindle 21 are axially aligned near the second origin (X1, Y1), moving the second spindle 21 away from the second origin (X1, Y1) will increase the axial misalignment, which in turn can increase the variance. In this case, the minimum value B3 of the variance shown in Fig. 11 will be equal to or greater than the minimum value B2 of the variance shown in Fig. 9. Therefore, if the minimum value B3 of the variance shown in Fig. 11 is equal to or greater than the minimum value B2 of the variance shown in Fig. 9, it is assumed that there is no need to further shift the second spindle 21 to another position. Therefore, in this embodiment, when the minimum value B3 of the variance shown in Fig. 11 is equal to or greater than the minimum value B2 of the variance shown in Fig. 9, it is determined that the shaft alignment between the first spindle 11 and second spindle 21 is complete there at the second origin (X1, Y1).

As described above, the position where the variance is even lower can be found by alternately repeating the steps of moving the second spindle 21 along the circle S1 for an angular position where the variance becomes minimum, and moving the second spindle 21 along the straight line L1 for a position where the variance becomes minimum. Thus the first spindle 11 and second spindle 21 can be axially aligned.

When the shaft alignment between the first spindle 11 and the second spindle 21 is complete, the shaft alignment unit 402 updates the origin of the second spindle 21 to the second origin (X1, Y1). At this point, the second spindle 21 is positioned at the second origin (X1, Y1). Therefore, the machining control by the machining control unit 401 is started from there with the second spindle 21 staying at the same position.

Next, the process flow of shaft alignment between the first spindle 11 and the second spindle 21 in this embodiment will be described. Fig. 12 is a flowchart illustrating the process flow of shaft alignment between the first spindle 11 and second spindle 21. This routine is carried out before the machining control by the machining control unit 401 is started in the machine tool 1. For example, the routine may be triggered by an input made by a user to the input unit 44 for starting the machining control. Alternatively, this routine may be carried out during the manufacture of the machine tool 1, or, when the user has started the machine tool 1 based on an input made by the user to the input unit 44. Alternatively, the routine can be carried out at a certain interval of time, or every time the machine tool 1 has been started a specified number of times.

At step S101, the shaft alignment unit 402 carries out a fastening step. The fastening step is a process of holding one and the other end of the workpiece W with the first spindle 11 and the second spindle 21, respectively, and rotating the spindles in sync. In this embodiment, the first spindle 11 is rotated at a preset rotation speed with the first spindle 11 clamping one end of the workpiece W. The second spindle 21, while being rotated in sync with the first spindle 11, then clamps the other end of the workpiece W.

At step S102, the shaft alignment unit 402 determines whether or not a preset time has elapsed since the completion of the fastening of the workpiece W by the second spindle 21. The preset time here means the time it takes for the vibration caused by the fastening of the workpiece W to reduce sufficiently, for example. When the determination at step S102 is affirmative, the process goes to step S103, and when the determination is negative, the process of step S102 is repeated.

At step S103, the shaft alignment unit 402 obtains the origin of the second spindle 21. The origin here refers to either the position of the second spindle 21 at the time when the fastening was completed at step S101, the origin (X0, Y0) set at step S310 to be described later, or the origin (X0, Y0) updated at step S106 in the previous run of the routine.

At step S104, the shaft alignment unit 402 carries out a circular motion process. The circular motion process is a process of acquiring the variance of readings of the vibration sensor 25 at several locations while moving the second spindle 21 along a circle S1 as described with reference to Fig. 6. Fig. 13 is a flowchart illustrating the process flow of the circular motion process. The process shown in Fig. 13 is a sub-routine executed at step S104. The circular motion process, when performed for the first time, is a process of determining the minimum value B1 of the variance shown in Fig. 7, and from the second time, is a process of determining the minimum value B3 of the variance shown in Fig. 11.

At step S201, the shaft alignment unit 402 moves the second spindle 21 to the circle S1. The shaft alignment unit 402 generates a command to move the second spindle 21 to the circle S1 and sends it to the adjustment mechanism 24. At step S202, the shaft alignment unit 402 moves the second spindle 21 on the circle S1 by a preset angle. The shaft alignment unit 402 generates a command to move the second spindle 21 on the circle S1 by a preset angle relative to the second headstock 22 and sends it to the adjustment mechanism 24.

At step S203, the shaft alignment unit 402 detects vibration by obtaining readings of the vibration sensor 25 throughout the measurement period. The readings of the vibration sensor 25 obtained here are stored in the auxiliary storage unit 43 along with the associated angular position at that time. At step S204, the shaft alignment unit 402 calculates the variance based on the readings obtained at step S203. At step S205, the shaft alignment unit 402 stores the calculated variance in the auxiliary storage unit 43 along with the associated angular position at that time.

At step S206, the shaft alignment unit 402 determines whether or not the second spindle 21 has moved all around the circle S1. The shaft alignment unit 402 determines whether or not the current position of the second spindle 21 matches its position after it moved at step S201. When the determination at step S206 is affirmative, the process goes to step S207, and when the determination is negative, the process returns to step S202.

At step S207, the shaft alignment unit 402 extracts the minimum value B1 from the variances stored at step S205. At step S208, the shaft alignment unit 402 obtains the angular position A1 corresponding to the minimum value B1 of the variance extracted at step S207 from the data stored at step S205.

At step S209, the shaft alignment unit 402 moves the second spindle 21 to its starting point, the origin (X0, Y0). The shaft alignment unit 402 generates a command to move the second spindle 21 to the origin (X0, Y0) and sends it to the adjustment mechanism 24. Alternatively, the process of step S209 may be carried out in parallel with the processes of step S207 and step S208, or, the process of step S209 may be carried out prior to the processes of step S207 and step S208. When the process of step S209 is complete, the process returns to the routine shown in Fig. 12 and proceeds to step S105.

Referring back to Fig. 12, at step S105, the shaft alignment unit 402 determines whether or not the minimum value B1 of the variance obtained at step S104 is equal to or greater than the minimum value B2 of the variance obtained at step S108 in the previous run of the routine. When this routine is carried out for the first time, value B2 has not been obtained yet. Therefore, an initial value of B2 is set such that the determination at step S105 will be affirmative when the spindles are axially aligned and stored in the auxiliary storage unit 43 in advance. Alternatively, the initial value of B2 may be set sufficiently high so that the determination at step S105 will be negative for sure. Alternatively, another step of calculating a variance at the origin may be added between step S102 and step S103, and this variance at the origin may be used as the initial value of B2. When the determination at step S105 is affirmative, the process goes to step S106, and when the determination is negative, the process returns to step S108, where the linear motion process is performed.

Fig. 14 is a flowchart illustrating the process flow of the linear motion process. The process shown in Fig. 14 is a sub-routine executed at step S108. The linear motion process is the process of determining the minimum value B2 of the variance shown in Fig. 9.

At step S301, the shaft alignment unit 402 moves the second spindle 21 a preset distance of the angular position A1 corresponding to the minimum value B1 of the variance obtained at step S208 in the immediately previous run of the sub-routine. The shaft alignment unit 402 generates a command to move the second spindle 21 a preset distance from the origin in the direction of the angular position A1 relative to the second headstock 22 and sends it to the adjustment mechanism 24.

At step S302, the shaft alignment unit 402 detects vibration by obtaining readings of the vibration sensor 25 throughout the measurement period. The readings of the vibration sensor 25 obtained here are stored in the auxiliary storage unit 43 along with the associated distance from the origin at that time. At step S303, the shaft alignment unit 402 calculates the variance based on the readings obtained at step S302. At step S304, the shaft alignment unit 402 stores the calculated variance in the auxiliary storage unit 43 along with the associated distance from the origin at that time.

At step S305, the shaft alignment unit 402 determines whether or not the variance trend has changed from decreasing to increasing. The shaft alignment unit 402 determines that the variance trend has changed from decreasing to increasing, for example, when the variance stored at step S304 in the last run of the sub-routine is lower than the variance stored at step S304 in the run before the last, and the variance stored at step S304 this time is higher than the variance stored at step S304 in the last run of the sub-routine. Alternatively, it may be determined that the variance trend has changed from decreasing to increasing when the variance stored at step S304 the last time has not changed, or if it has, the change is substantially small. The minimal value of the variance may be determined by any other methods. When the determination at step S305 is affirmative, the process goes to step S306, and when the determination is negative, the process returns to step S301.

At step S306, the shaft alignment unit 402 extracts the minimum value B2 from the variances stored at step S304. At step S307, the shaft alignment unit 402 obtains the distance A2 corresponding to the minimum value B1 of the variance extracted at step S306 from the data stored at step S304. Further, at step S308, the shaft alignment unit 402 calculates the coordinates corresponding to the distance A2, i.e., second origin (X1, Y1), based on the distance A2 obtained at step S307. The shaft alignment unit 402 calculates X1 and Y1 by the equations X1 = A2·cosA1, Y1 = A2·sinA1, for example.

At step S309, the shaft alignment unit 402 moves the second spindle 21 to the second origin (X1, Y1). The shaft alignment unit 402 generates a command to move the second spindle 21 to the second origin (X1, Y1) and sends it to the adjustment mechanism 24. At step S310, the shaft alignment unit 402 updates the origin of the second spindle 21 so that the second origin (X1, Y1) is the new origin (X0, Y0). When the process of step S310 is complete, the process returns to the routine shown in Fig. 12 and returns to step S103. Namely, until the determination at step S105 becomes affirmative, the shaft alignment unit alternately repeats the steps of moving the second spindle 21 along the circle S1 and obtaining an angular position A1 where the variance becomes lowest, and moving the second spindle 21 in the direction in which the variance becomes lowest and obtaining the position (X1, Y1) where the variance of the readings of the vibration sensor 25 becomes lowest.

Referring back to Fig. 12, at step S106, the shaft alignment unit 402 updates the current position of the second spindle 21 as the origin of the second spindle 21 when machining the workpiece W. This origin of the second spindle 21 is stored in the auxiliary storage unit 43. At step S107, the shaft alignment unit 402 resets the minimum value B2 of the variance. The minimum value B2 of the variance is thus changed back to the initial value.

As described above, according to this embodiment, the first spindle 11 and second spindle 21 can be axially aligned based on the variance of the readings of the vibration sensor 25. Namely, shaft alignment can be achieved swiftly and more accurately by adjusting the relative positions of the first spindle 11 and second spindle 21 such that the variance of the readings of the vibration sensor 25 is lower.

### <Second Embodiment>

In the first embodiment, the variance of the readings of the vibration sensor 25 is obtained while moving the second spindle 21 along a circle S1 and along a straight line L1. In the second embodiment, a mesh is generated around the second spindle 21 and the variance of the readings of the vibration sensor 25 is obtained at each intersection of the mesh. It is determined that the first spindle 11 and the second spindle 21 are axially aligned at a point where the variance becomes lowest.

The mesh size is related to the shaft alignment accuracy; the smaller the mesh size, the more accurate the shaft alignment will be. However, a small mesh size means an increased number of positions where the variance is obtained and it takes more time for the shaft alignment. Therefore, the mesh size can be determined based on which of the shaft alignment accuracy and the time required for the shaft alignment should be given priority.

The mesh size may initially be set large. The second spindle 21 is moved to a position where the variance becomes minimum, and there, another smaller mesh may be generated around that position to determine a point where the variance becomes minimum. The candidates for the position where the first spindle 11 and second spindle 21 are axially aligned can be reduced in this manner by gradually reducing the mesh size and repeatedly calculating the variance.

The first spindle 11 and second spindle 21 can be axially aligned in this manner, too, by generating a mesh and calculating the variance of the readings of the vibration sensor 25 at each intersection of the mesh.

### <Other Embodiments>

While the shaft alignment is performed using the variance of readings of the vibration sensor 25 in the first and second embodiments, the sensor is not limited to this and may be any sensor capable of detecting a physical quantity that is correlated to vibration. For example, the sensor may be a displacement meter, an ammeter, an AE (Acoustic Emission) sensor, or a microphone.

Instead of moving the second spindle 21 along a circle S1 as in the first embodiment, the spindle may be moved along the sides of a polygon having the origin as the center. At each vertex of the polygon, vibration can be detected using the vibration sensor 25 and the variance may be calculated.

While variance (i.e., the average of the squares of the deviations from the mean) is used in the first and second embodiments, other values indicating the degree of scatter can also be used. For example, instead of variance, the standard deviation, root mean square, range (difference between maximum and minimum values), or amplitude of vibration may be used.

Fig. 15 is a diagram showing the empirically obtained range of readings of the vibration sensor 25 (difference between the maximum and minimum values) when the second spindle 21 is intentionally displaced relative to the first spindle 11. The horizontal axis in Fig. 15 represents the displacement in the X-axis direction of the second spindle 21 relative to the first spindle 11. The X axis referred to in Fig. 15 corresponds to the X axis as defined in Fig. 1. There is no displacement in the Y-axis direction. Fig. 15 plots the readings range that was determined several times for each amount of displacement. The readings range in Fig. 15 is the difference between the maximum and minimum values detected by the vibration sensor 25 during a period denoted as "measurement period" in Fig. 4.

As shown in Fig. 15, the displacement in the X-axis direction and the readings range have a correlation; the larger the absolute value of displacement in the X-axis direction, the larger the readings range. Therefore, similarly to the variance described in the first embodiment, the first spindle 11 and second spindle 21 can be axially aligned based on the readings range. Namely, the first spindle 11 and second spindle 21 can be axially aligned by moving the second spindle 21 in a direction in which the readings range of the vibration sensor 25 reduces.

### [Reference Signs List]

- 1: Machine tool
- 11: First spindle
- 12: First headstock
- 13: First clamp
- 21: Second spindle
- 22: Second headstock
- 23: Second clamp
- 24: Adjustment mechanism
- 25: Vibration sensor
- 40: Controller
- 41: Processor
- 42: Main storage unit
- 43: Auxiliary storage unit
- 44: Input unit
- 45: Output unit

## Claims

1. A machine tool comprising:
a first spindle holding one end of a workpiece;
a second spindle holding another end of the workpiece;
a sensor detecting a physical quantity related to a vibration during synchronous rotation of the first spindle and the second spindle with the workpiece being held by the first spindle and the second spindle; and
a controller performing shaft alignment between the first spindle and the second spindle based on the physical quantity.

2. The machine tool according to claim 1, wherein
the controller performs:
detecting the physical quantity with the sensor at each of a first plurality of positions where the first spindle and the second spindle are relatively displaced from each other; and
setting a position, where the physical quantity is smallest, from among the first plurality of positions as a first target position for the first spindle and the second spindle.

3. The machine tool according to claim 2, wherein
the first plurality of positions are circumferentially displaced positions on a same circle.

4. The machine tool according to claim 3, wherein
the controller performs:
detecting the physical quantity with the sensor at each of a second plurality of positions where the first spindle and the second spindle are relatively displaced from each other from a center of the circle in a direction toward the first target position: and
setting a position, where the physical quantity is smallest, from among the second plurality of positions as a second target position for the first spindle and the second spindle.

5. The machine tool according to claim 4, wherein the controller repeatedly performs:
detecting the physical quantity with the sensor at each of the first plurality of positions by using the second target position as the center of the circle, and updating the first target position by obtaining a position, where the physical quantity is smallest, from among the first plurality of positions, and
detecting the physical quantity with the sensor at each of the second plurality of positions in a direction toward the updated first target position, and updating the second target position by obtaining a position, where the physical quantity is smallest, from among the second plurality of positions.

6. The machine tool according to claim 5, wherein,
in a case where the physical quantity at the first target position is equal to or greater than the physical quantity obtained at the immediately previous second target position, the controller determines that the immediately previous second target position is a position where the first spindle and the second spindle are axially aligned.

7. The machine tool according to any one of claims 2 to 6, wherein
the physical quantity is a variance of detection-value readings of the sensor.

8. The machine tool according to any one of claims 2 to 7, wherein
the controller sets the first plurality of positions within a range of axial misalignment tolerances between the first spindle and the second spindle.

9. A machine tool alignment method for a machine tool, the machine tool including:
a first spindle holding one end of a workpiece;
a second spindle holding another end of the workpiece;
a sensor detecting a physical quantity related to a vibration during synchronous rotation of the first spindle and the second spindle with the workpiece being held by the first spindle and the second spindle; and
a controller performing shaft alignment between the first spindle and the second spindle based on the physical quantity.
